# FASCICULE DE BREVET EUROPEEN

(11) **EP 3 400 399 B1**
(45) Date de publication et mention de la délivrance du brevet: **11.09.2019**
(21) Numéro de dépôt: 16829299.3
(22) Date de dépôt: 30.12.2016
(51) Int. Cl.: G09B 9/12, F16M 11/20, F16M 11/04, F16M 11/12

(54) **SYSTÈME DE GÉNÉRATION DE DÉPLACEMENT D'UNE PLAQUE DE SUPPORT SELON SIX DEGRÉS DE LIBERTÉ**
SYSTEM ZUR ERZEUGUNG DER BEWEGUNG EINER TRÄGERPLATTE IN SECHS FREIHEITSGRADEN
SYSTEM FOR GENERATING THE MOVEMENT OF A SUPPORT PLATE IN SIX DEGREES OF FREEDOM

(30) Priorité: 06.01.2016 FR 1650094
(43) Date de publication de la demande: 14.11.2018
(73) Titulaire: Micro-Contrôle - Spectra-Physics SAS, 91000 Evry (FR)
(72) Inventeur: DURAND, Eric, 45200 Amilly (FR); RETY, Bruno, 45460 Bouzy la Forêt (FR)
(74) Mandataire: Gevers & Orès
(86) Numéro de dépôt international: PCT/FR2016/053686
(87) Numéro de publication internationale: WO 2017/118797

(56) Documents cités:
- EP-A1- 2 816 723
- FR-A1- 2 757 925
- US-A1- 2004 129 856
- US-A1- 2015 308 921

## Description

La présente invention concerne un système de génération de déplacement d'une plaque de support selon plusieurs degrés de liberté.

Ce système a pour but de permettre le déplacement relatif entre deux plaques, une plaque (ou plateforme) de support qui est apte à porter un dispositif optique, mécanique ou autre, pour réaliser des mesures, des traitements,..., et une plaque inférieure qui est posée sur un élément de support, par exemple sur un poste de travail.

Pour générer un tel déplacement selon les six degrés de liberté possibles, on connaît un positionneur de type hexapode, qui est un robot parallèle constitué de six actionneurs formant des jambes. Les six jambes sont actionnées pour changer de longueur et varier l'orientation de la plateforme supérieure. Ainsi, à une position donnée de la plateforme supérieure correspond un ensemble de six longueurs uniques des jambes.

Les systèmes de type robot parallèle, notamment des hexapodes, présentent généralement des inconvénients, et en particulier un encombrement important et/ou un domaine de travail restreint.

Par ailleurs, on connaît, par le document FR - 2 757 925, un dispositif modulaire de mise en mouvement de charge selon au moins trois degrés de liberté, comportant une plate-forme triangulaire supportant une charge. Le document EP2816723A1 divulgue un système de génération de déplacement similaire.

La présente invention a pour objet de remédier à ces inconvénients. Elle concerne un système de génération de déplacement d'une plaque de support, la plaque de support étant, dans une position dite neutre, sensiblement parallèle à un plan XY défini par une direction dite X et une direction dite Y, ledit système étant configuré pour pouvoir déplacer ladite plaque selon au moins certains des six degrés de liberté, lesdits six degrés de liberté correspondant, respectivement, à une translation dite Xi le long de la direction X et une rotation dite θX autour de cette direction X, à une translation dite Yi le long de la direction Y et une rotation dite θY autour de cette direction Y, à une translation dite Zi le long d'une direction dite Z et une rotation dite θZ autour de cette direction Z, la direction Z étant orthogonale auxdites directions X et Y.

Selon l'invention, ledit système de génération de déplacement comprend au moins deux étages de commande superposés selon la direction Z et solidarisés l'un à l'autre, au moins l'un desdits étages de commande comprend un module de commande, et ledit au moins un module de commande comprend uniquement des unités de déplacement configurées pour générer chacune un déplacement en translation dans le plan XY, et ceci respectivement selon des directions différentes.

Ainsi, grâce à l'invention, comme précisé ci-dessous, le système de génération de déplacement est de type modulaire. En raison de cette architecture modulaire et de l'utilisation d'unités de déplacement configurées pour générer uniquement des déplacements en translation, on obtient un système de génération de déplacement très compact comme précisé ci-après. De plus, le système de génération de déplacement présente un domaine de travail étendu. Ceci permet de remédier aux inconvénients précités.

De façon avantageuse, les unités de déplacement sont agencées dans le plan XY et positionnées de manière à présenter des directions de translation différentes qui forment, respectivement, un angle de 120° entre elles.

Dans un mode de réalisation préféré, un premier module de commande comprend :
- une première plaque inférieure et une première plaque supérieure ;
- au moins deux unités de déplacement, les unités de déplacement étant fixées sur une face supérieure de la première plaque inférieure ; et
- des rails de guidage rectilignes, chacun desdits rails de guidage étant monté sur l'une desdites unités de déplacement auquel il est associé, chacun desdits rails de guidage étant agencé orthogonalement à la direction de déplacement de l'unité de déplacement associée et étant configuré de manière à se déplacer sous l'action de l'unité de déplacement associée, chacun desdits rails de guidage portant un chariot mobile qui est configuré pour être librement mobile orthogonalement à la direction de déplacement de l'unité de déplacement associée, chacun desdits chariots mobiles étant lié à une face inférieure de la première plaque supérieure.

Dans ce cas, dans une première variante de réalisation, le premier module de commande est configuré pour générer des déplacements Xi et Yi et il comprend deux unités de déplacement et un rail de guidage auxiliaire rectiligne, le rail de guidage auxiliaire étant agencé selon une direction différente des directions de déplacement des deux unités de déplacement et portant un chariot mobile configuré pour être librement mobile, le chariot mobile étant fixé à la face inférieure de la première plaque supérieure.

En outre, dans une deuxième variante de réalisation, le premier module de commande est configuré pour générer des déplacements Yi et θZ et il comprend deux unités de déplacement et un rail de guidage auxiliaire rectiligne, le rail de guidage auxiliaire étant agencé selon une direction différente des directions de déplacement des deux unités de déplacement et portant un chariot mobile configuré pour être librement mobile, chacun desdits trois chariots mobiles étant pourvu d'un système de rotation configuré pour être librement rotatif dans le plan XY, les trois systèmes de rotation étant liés, chacun, à la face inférieure de la première plaque supérieure. Dans ce cas, avantageusement, le système comporte un étage de commande auxiliaire configuré pour générer un déplacement Xi dudit premier module de commande.

Par ailleurs, dans une troisième variante de réalisation (préférée), le premier module de commande est configuré pour générer des déplacements Xi, Yi et θZ, et il comprend :
- trois unités de déplacement ; et
- trois rails de guidage rectilignes, chacun desdits rails de guidage étant monté sur l'une desdites unités de déplacement auquel il est associé, chacun desdits rails de guidage étant agencé orthogonalement à la direction de déplacement de l'unité de déplacement associée et étant configuré de manière à se déplacer sous l'action de l'unité de déplacement associée, chacun desdits rails de guidage portant un chariot mobile qui est configuré pour être librement mobile orthogonalement à la direction de déplacement de l'unité de déplacement associée, chacun desdits chariots mobile étant pourvu d'un système de rotation configuré pour être librement rotatif dans le plan XY, les trois systèmes de rotation étant liés, chacun, à la face inférieure de la première plaque supérieure.

Par ailleurs, dans un mode de réalisation préféré, un second module de commande est configuré pour générer des déplacements θX, θY et Zi, et il comprend :
- une seconde plaque inférieure et une seconde plaque supérieure ;
- trois unités de déplacement configurées pour générer un déplacement en translation, les unités de déplacement étant fixées sur une face supérieure de la seconde plaque inférieure ; et
- trois rails de guidage rectilignes, chacun desdits rails de guidage étant monté, de façon inclinée par rapport au plan XY, sur l'une desdites unités de déplacement auquel il est associé, chacun desdits rails de guidage étant agencé longitudinalement à la direction de déplacement de l'unité de déplacement associée et étant configuré de manière à se déplacer sous l'action de l'unité de déplacement associée, chacun desdits rails de guidage portant un chariot mobile qui est configuré pour être librement mobile, chacun desdits chariots mobile étant pourvu d'une rotule configurée pour être librement rotative, les trois rotules étant articulées, chacune, à la face inférieure de la première plaque supérieure.

Dans une première variante de réalisation, il comporte, de plus, au moins l'un, mais de préférence plusieurs des trois étages de commande auxiliaires suivants :
- un étage de commande auxiliaire configuré pour générer un déplacement Xi ;
- un étage de commande auxiliaire configuré pour générer un déplacement Yi ; et
- un étage de commande auxiliaire configuré pour générer un déplacement θZ.

En outre, dans une seconde variante de réalisation (préférée), le système de génération de déplacement comprend uniquement deux étages de commande, dont un premier, dit inférieur, comprend ledit premier module de commande configuré pour générer des déplacements Xi, Yi et θZ, et dont un second, dit supérieur, comprend ledit second module de commande configuré pour générer des déplacements θX, θY et Zi.

Les figures annexées feront bien comprendre comment l'invention peut être réalisée. Sur ces figures, des références identiques désignent des éléments semblables.
La figure 1 est une vue en perspective d'un mode de réalisation préféré d'un système de génération de déplacement.
La figure 2 est une vue en perspective, dans une position montée, d'un premier module de commande du système de génération de déplacement de la figure 1, associé à un étage de commande auxiliaire.
La figure 3 est une vue en perspective, partiellement éclatée, du module de commande de la figure 2.
La figure 4 est une vue éclatée, en perspective, du module de commande de la figure 2.
La figure 5 est une vue en perspective d'un second module de commande du système de génération de déplacement de la figure 1.
La figure 6 est une vue éclatée, en perspective, du module de commande de la figure 5.
La figure 7 est une vue, en perspective, du module de commande de la figure 5, associé à deux étages de commande auxiliaires.
La figure 8 est une vue, en perspective, du module de commande de la figure 5, associé à trois étages de commande auxiliaires.

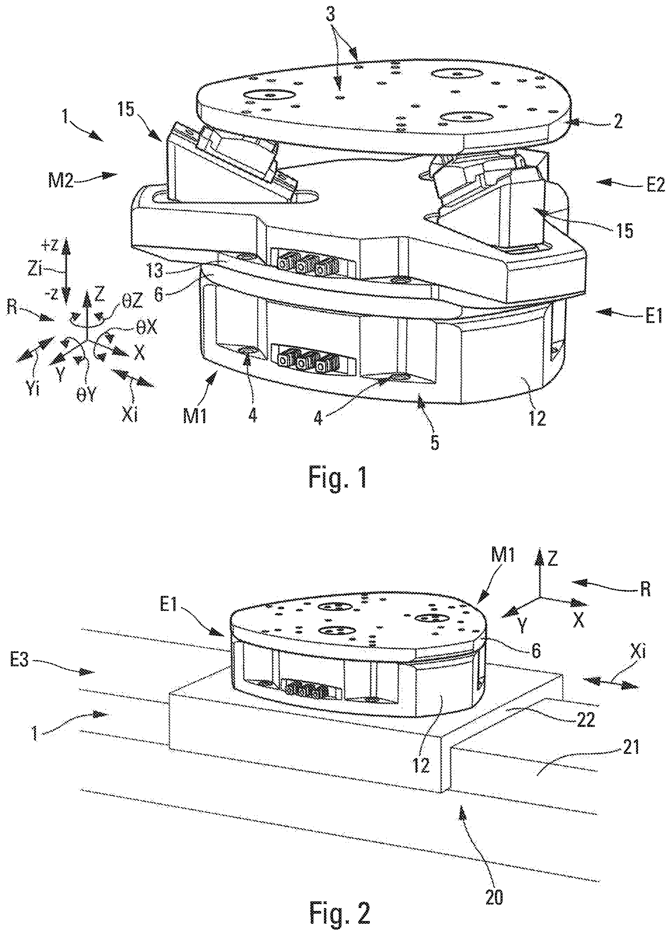

Le système 1 représenté sur la figure 1 et permettant d'illustrer l'invention, est un système pour générer un déplacement d'une plaque (ou plateforme) 2, de préférence globalement plane, par rapport à un support (non représenté) sur lequel est posé (et notamment fixé) le système 1.

La plaque 2, par exemple en métal, est agencée sensiblement parallèlement à un plan XY défini par une direction dite X (ou direction longitudinale) et une direction dite Y (ou direction latérale), dans une position dite neutre de la plaque 2, c'est-à-dire dans une position de base sans activation des différents moyens de déplacement précisés ci-dessous du système 1.

Ces directions X et Y font partie d'un repère R (ou XYZ) qui est représenté sur les figures 1, 2 et 5 à 7. Ce repère R destiné à faciliter la compréhension comprend, en plus des directions (ou axes) X et Y formant le plan XY, une direction (ou axe) dite Z (ou verticale) qui est orthogonale audit plan XY.

Pour des raisons de clarté, le repère R représenté de façon détaillée sur la figure 1 est positionné à l'extérieur du système 1. Toutefois, la direction Z passe par un axe vertical central.

Comme indiqué ci-dessus, la plaque de support 2 est dans la position neutre (non activée), sensiblement parallèle au plan XY. Le système 1 est configuré pour pouvoir déplacer ladite plaque 2 selon au moins certains des six degrés de liberté.

Ces six degrés de liberté (représentés par des doubles flèches) correspondent, respectivement, comme illustré sur la figure 1 :
- à une translation, nommée Xi, le long de la direction X ;
- à une rotation dite θX, autour de la direction X ;
- à une translation, nommée Yi, le long de la direction Y ;
- à une rotation dite θY, autour de la direction Y ;
- à une translation, nommée Zi, le long de la direction Z ; et
- à une rotation dite θZ, autour de la direction Z.

Les adjectifs « supérieur » et « inférieur » dans la description ci-après, s'appliquent par rapport aux sens défini par la flèche de la direction Z, supérieur étant dans le sens (+z) de la flèche et inférieur étant dans le sens opposé (-z), comme représenté sur la figure 1.

La plaque 2 peut supporter des éléments particuliers (non représentés), qui peuvent être fixés sur elle, via des moyens de fixation, par exemple des vis, traversant des trous 3 visibles dans la plaque 2 (figure 1).

De plus, le système 1 peut-être posé et fixé sur un élément de support (non représenté) via des moyens de fixation, par exemple des vis, traversant des trous 4 visibles dans une plaque 5 inférieure du système 1 (figure 1).

Dans une application préférée, le système 1 fait partie d'un dispositif (ou machine) de positionnement précis pour l'industrie du semi-conducteur, en particulier pour des applications de traitement ou de contrôle soit en atmosphère standard soit dans des cuves à vide, ou pour l'industrie de l'optique et de l'optoélectronique, pour le positionnement d'optiques, de composants optoélectroniques, ...

Dans un mode de réalisation préféré, représenté sur la figure 1, le système 1 comprend deux étages de commande E1 et E2 superposés selon la direction Z et solidarisés l'un à l'autre.

Le système 1 est de type modulaire, et chacun desdits étages de commande E1 et E2 comprend un module de commande M1 et M2.

De plus, chacun desdits modules de commande M1 et M2 comprend des unités de déplacement U1 et U2 configurées pour générer, chacune, uniquement un déplacement en translation, et ceci dans le plan XY.

Ces unités de déplacement U1 et U2 qui comportent par exemple, chacune, un moteur électrique ou un moteur d'un autre type, sont commandables, de façon usuelle, par un opérateur (ou par un système de commande automatique), par l'intermédiaire d'un élément de commande non représenté. En particulier, la distance et le sens de la translation (dans la direction considérée), et éventuellement la vitesse de translation, sont commandables. Chacune de ces unités de déplacement U1 et U2 définit donc un axe motorisé (selon sa direction (ou axe) de translation).

La position recherchée de la plaque 2 est obtenue par une combinaison particulière de commandes (et donc de positionnements) des différentes unités de déplacement U1 et U2 considérées.

De plus, les unités de déplacement U1 et U2 sont configurées pour générer, chacune, un déplacement en translation, respectivement selon des directions différentes. Plus précisément, les unités de déplacement U1 et U2 sont agencées dans le plan XY et positionnées de manière à présenter des directions de translation différentes qui forment, respectivement, de préférence un angle de 120° entre elles.

Dans le mode de réalisation préféré, représenté sur la figure 1, le système 1 comprend uniquement les deux étages de commande E1 et E2 ;
- dont le premier E1, inférieur, comprend ledit module de commande M1 qui est configuré pour générer des déplacements Xi, Yi et θZ (c'est-à-dire des translations selon les directions X et Y et une rotation autour de la direction Z) ; et
- dont le second E2, supérieur, comprend ledit module de commande M2 qui est configuré pour générer des déplacements θX, θY et Zi.

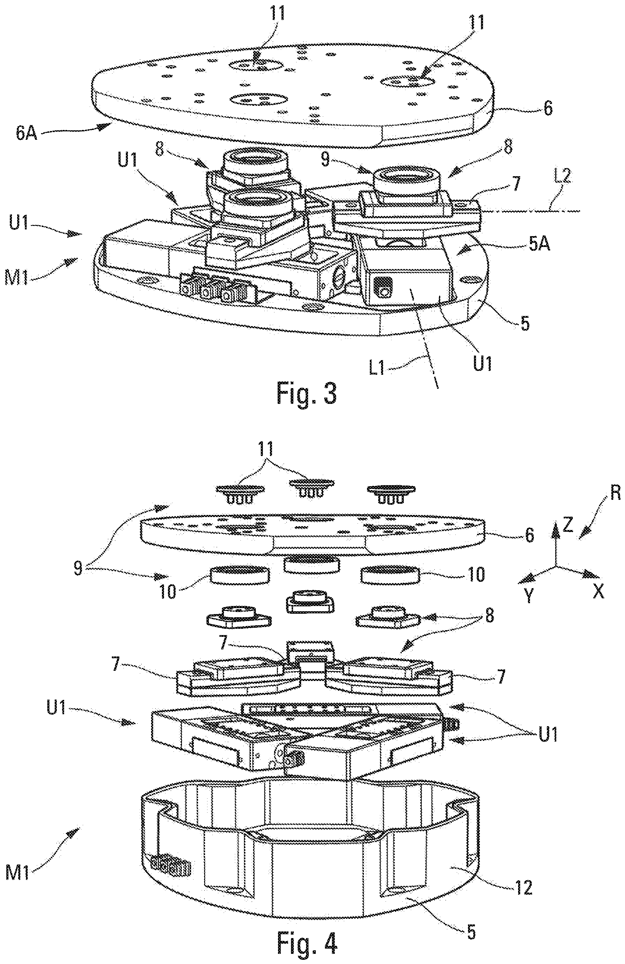

Plus précisément, dans un mode de réalisation préféré, le module de commande M1 comprend, comme représenté sur les figures 2 à 4 :
- une plaque inférieure 5 et une plaque supérieure 6 ;
- trois unités de déplacement U1. Les trois unités de déplacement U1 sont fixées sur une face supérieure 5A de la plaque inférieure 5, comme visible sur la figure 3 ; et
- trois rails de guidage 7 rectilignes.

Chacun des trois rails de guidage 7 est monté sur l'une des trois unités de déplacement U1, auquel il est associé.

Ainsi, le module de commande M1 comprend un rail de guidage 7 par unité de déplacement U1 et chaque unité de déplacement U1 est pourvue d'un rail de guidage 7.

Chacun des rails de guidage 7 est agencé orthogonalement à la direction de déplacement de l'unité de déplacement U1 associée, comme représenté pour un rail de guidage 7 sur la partie droite de la figure 3, qui comprend un axe longitudinal L2. Cet axe longitudinal L2 du rail de guidage 7 est orthogonal à l'axe longitudinal (ou axe de déplacement) L1 de l'unité de déplacement U1.

Chacun des rails de guidage 7 est configuré de manière à se déplacer (selon la direction L1) sous l'action de l'unité de déplacement U1 associée.

En outre, chacun des rails de guidage 7 porte un chariot mobile 8. Ce chariot mobile 8 est configuré pour être librement mobile selon la direction L2, c'est-à-dire orthogonalement à la direction de déplacement L1 de l'unité de déplacement U1 associée.

Par ailleurs, chacun des chariots mobiles 8 est pourvu d'un système de rotation 9 comprenant, de préférence, un roulement à billes 10, qui est configuré pour être librement rotatif dans le plan de la plaque supérieure 6 correspondant au plan XY dans la position neutre.

Les trois systèmes de rotation 9 sont liés, chacun, à la face inférieure 6A de la plaque supérieure 6, par l'intermédiaire d'éléments de fixation 11 usuels agencés dans la plaque supérieure 6.

De plus, le module de commande M1 comporte une paroi latérale fermée 12 qui est solidaire de la plaque inférieure 5, comme représenté sur la figure 4.

Par conséquent, une commande par un opérateur ou un système de commande automatique d'une unité de déplacement U1 génère le déplacement du rail de guidage 7. Pendant ce déplacement du rail de guidage 7, le chariot mobile 8 peut se déplacer librement et agir sur la position de la plaque supérieure 6.

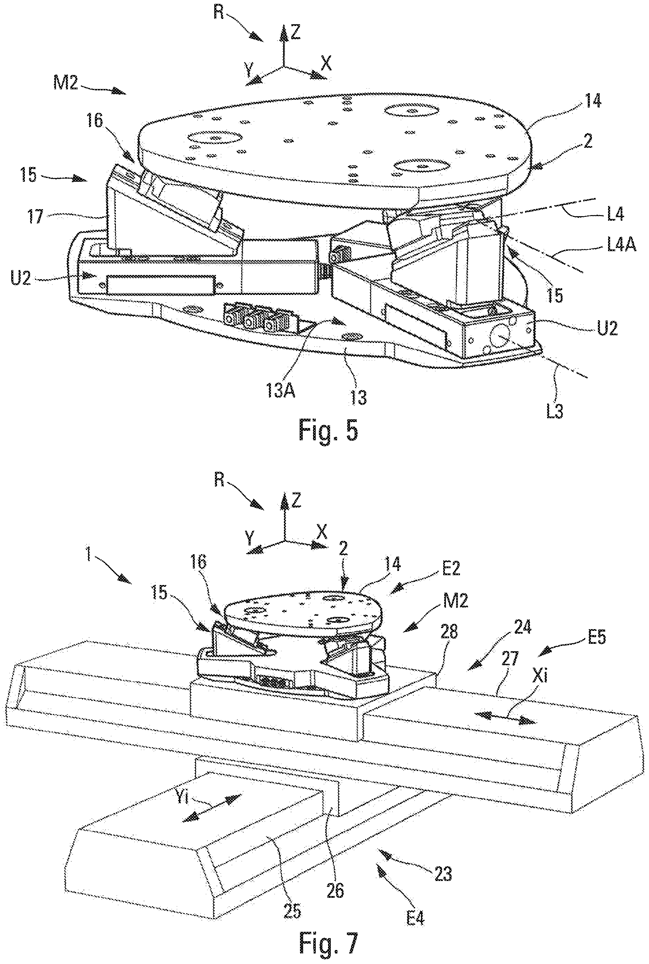

Par ailleurs, dans un mode de réalisation préféré, le second module de commande M2 comprend, comme représenté sur les figures 5 à 7 :
- une plaque inférieure 13 et une plaque supérieure 14 (qui correspond à la plaque 2 ou à une plaque sur laquelle est fixée la plaque 2) ;
- trois unités de déplacement U2 configurées pour générer un déplacement en translation. Les trois unités de déplacement U2 sont fixées sur une face supérieure 13A (figure 5) de la plaque inférieure 13. Les unités de déplacement U2 sont, de préférence, similaires aux unités de déplacement U1 du module de commande M1 ; et
- trois rails de guidage 15 rectilignes.

Chacun des trois rails de guidage 15 est monté sur l'une des trois unités de déplacement U2, auquel il est associé. Ainsi, le module de commande M2 comprend un rail de guidage 15 par unité de déplacement U2 et chaque unité de déplacement U2 est pourvue d'un rail de guidage 15.

Chacune des unités de déplacement U2 est fixée sur la face supérieure 13A pour générer un déplacement selon une direction donnée dans le plan XY, comme illustré par la direction L3 pour l'unité de déplacement U2 visible sur la droite de la figure 5.

En outre, chacun des rails de guidage 15 est agencé longitudinalement à la direction de déplacement L3 de l'unité de déplacement U2 associée. De plus, il est configuré de manière à se déplacer sous l'action de l'unité de déplacement U2 associée.

Par ailleurs, chacun des rails de guidage 15 porte un chariot mobile 16 qui est configuré pour être librement mobile. Chacun des rails de guidage 15 est monté de façon inclinée, selon la direction verticale Z par rapport au rail de guidage associé.

Comme représenté sur la figure 6, dans un plan vertical XZ ou YZ, la direction de déplacement L4 du chariot mobile 16 librement mobile présente un angle a, non nul par rapport à la direction de déplacement du rail de guidage 15 (sous l'action de l'unité de déplacement U2). Pour ce faire, le rail de guidage 15 est lié à l'unité de déplacement U2 via un élément de support 17 en biseau de forme triangulaire dans le plan vertical.

En raison de son positionnement sur l'unité de déplacement U2, le chariot mobile 17 se déplace dans le plan XY selon la direction L3. Comme représenté sur la figure 5, la projection L4A de la direction L4 de déplacement dans le plan XY, est parallèle (ou confondue) à la direction L3.

Par ailleurs, le chariot mobile 16 comprend un élément de support 18 en biseau, qui coopère avec l'élément de support 17 en biseau, et qui est adapté à ce dernier pour que la face supérieure de l'élément de support 18 soit sensiblement parallèle à la face inférieure de l'élément de support 17.

En outre, chacun des chariots 18 est pourvu d'une rotule 19 configurée pour être librement rotative.

Les trois rotules 19 sont montées, chacune, de façon articulée, à la face inférieure 14A de la plaque supérieure 14.

En raison notamment de son architecture modulaire et de l'utilisation d'unités de déplacement U1 et U2 configurées pour générer uniquement des déplacements en translation, le système 1 (de génération de déplacement) tel que décrit ci-dessus est très compact, et de plus, il présente un domaine de travail étendu, notamment par rapport à des systèmes usuels (en particulier de type hexapode).

Dans le mode de réalisation préféré du système 1 tel que décrit ci-dessus et représenté sur la figure 1, ledit système 1 comprend deux étages de commande E1 et E2 comprenant, respectivement, les modules de commande M1 et M2 tels que décrits ci-dessus.

Toutefois, dans le cadre de la présente invention, et comme précisé ci-dessous :
- le module de commande M1 peut être réalisé différemment, notamment en modifiant au moins l'une de ses caractéristiques, en particulier lorsqu'il doit mettre en oeuvre uniquement certains des déplacements Xi, Yi et θZ ; et
- le système de génération de déplacement 1 peut comporter uniquement l'un de ces deux modules de commande M1 et M2, qui est alors associé à un ou plusieurs étages de commande auxiliaires.

Ainsi, dans une première variante de réalisation par rapport à celle des figures 2 à 4 précitées, le module de commande M1 est configuré pour générer uniquement des déplacements Xi et Yi.

Dans cette première variante de réalisation (non représentée spécifiquement), le module de commande M1 comprend uniquement deux unités de déplacement U1, ainsi qu'un rail de guidage auxiliaire rectiligne. Ce rail de guidage auxiliaire remplace la troisième unité de déplacement U1 des modes de réalisation des figures 2 à 4.

Le rail de guidage auxiliaire est agencé selon une direction différente des directions de déplacement des deux unités de déplacement et identique à celle de la troisième unité de déplacement des figures 2 à 4.

De plus, le rail de guidage porte un chariot mobile configuré pour être librement mobile et le rail de guidage auxiliaire est agencé de sorte que le chariot mobile puisse se déplacer, librement, selon la direction de déplacement de ladite troisième unité de déplacement remplacée.

Les trois chariots mobiles sont directement fixés sur la face inférieure 6A de la plaque supérieure 6 et ne sont pas pourvus de système de rotation.

Le module de déplacement conforme à cette première variante de réalisation, peut être associé, au sein d'un système de génération de déplacement :
- à un premier étage de commande auxiliaire qui est configuré pour générer, de façon usuelle, un déplacement θZ de manière à obtenir un système de génération de déplacement Xi, Yi et θZ ;
- à un second étage de commande auxiliaire qui est configuré pour générer, de façon usuelle, un déplacement Zi de manière à obtenir un système de génération de déplacement selon Xi, Yi et Zi ; ou
- simultanément auxdits premier et second étages de commande auxiliaires.

En outre, dans une seconde variante de réalisation, le premier module de commande M1 est configuré pour générer uniquement des déplacements Yi et θZ.

Dans cette seconde variante de réalisation, le module de commande M1 comprend deux unités de déplacement U1, ainsi qu'un rail de guidage auxiliaire rectiligne.

Le rail de guidage auxiliaire est agencé selon une direction différente des directions de déplacement des deux unités de déplacement et identique à celle de la troisième unité de déplacement des figures 2 à 4.

De plus, le rail de guidage auxiliaire, ainsi que les deux unités de déplacement, portent, chacun, un chariot mobile configuré pour être librement mobile.

Dans ce cas, chacun des trois chariots mobiles, similaires par exemple au chariot mobile 8, est pourvu d'un système de rotation configuré pour être librement rotatif dans le plan XY, tel que le système de rotation 9 précité.

De plus, les trois systèmes de rotation sont liés, chacun, à la face inférieure 6A de la plaque supérieure 6A.

Associé à cette seconde variante de réalisation, le système 1 peut comporter, dans un mode de réalisation particulier, un étage de commande auxiliaire E3 représenté en trait fin (à titre d'illustration) sur la figure 2. Cet étage de commande auxiliaire E3 est configuré pour générer un déplacement Xi dudit module de commande M1.

Cet étage de commande auxiliaire E3 peut comporter un élément de déplacement 20 pour générer le déplacement Xi. Dans un mode de réalisation particulier, l'élément de déplacement 20 est pourvu d'un rail de guidage 21 portant un chariot mobile 22, et de moyens de commande de déplacement (non représentés) du chariot mobile 22 sur le rail de guidage 21, tels qu'un moteur électrique par exemple.

Le chariot mobile 22 est donc monté mobile sur le rail de guidage 21 et il porte le module de commande M1 conforme à la seconde variante de réalisation.

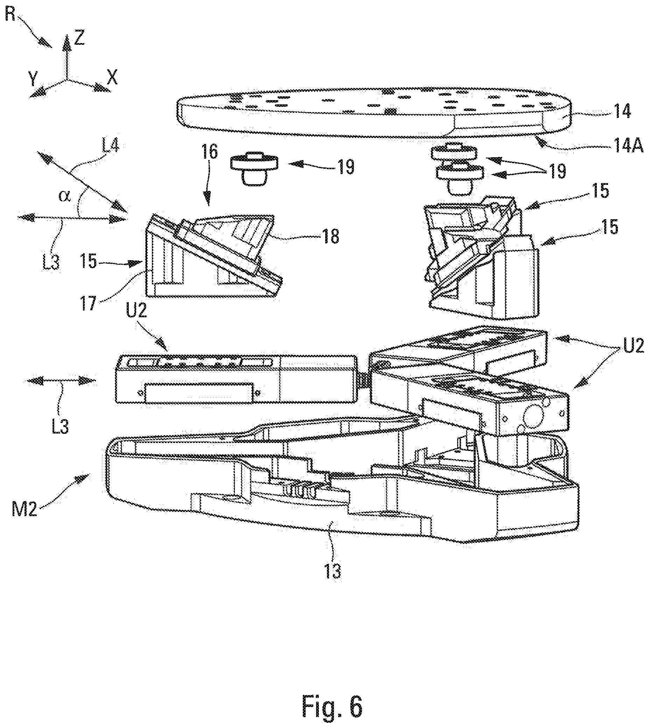

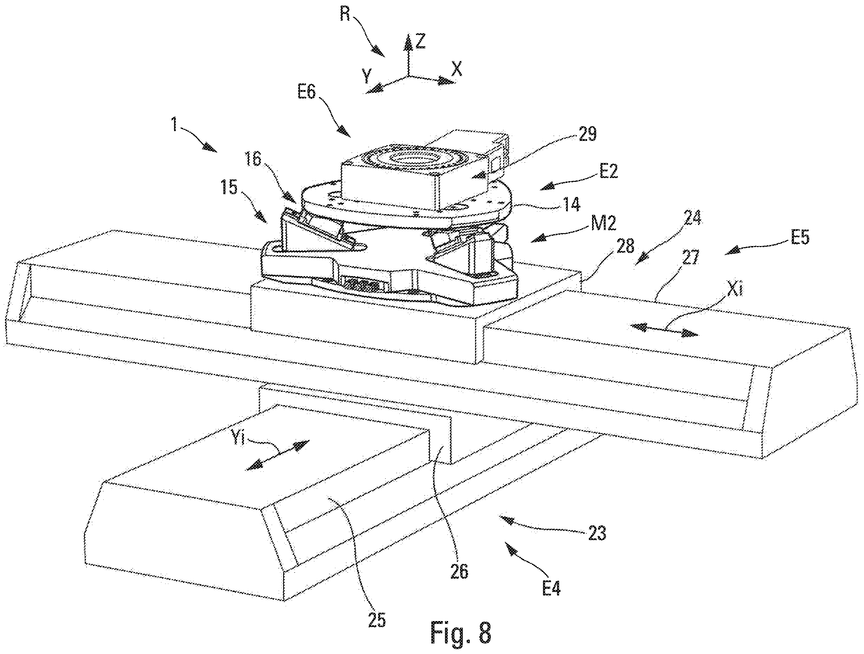

Par ailleurs, dans une autre variante de réalisation (représentée sur les figures 7 et 8), le système de génération de déplacement comprend, associés au module de commande M2, au lieu du module de commande M1, au moins l'un (mais de préférence plusieurs) des trois étages de commande auxiliaires suivants :
- un étage de commande auxiliaire E5 configuré pour générer un déplacement Xi ;
- un étage de commande auxiliaire E4 configuré pour générer un déplacement Yi ; et
- un étage de commande auxiliaire E6 configuré pour générer un déplacement θZ.

Toutes les combinaisons du module de commande M2 avec l'un ou plusieurs des étages de commande auxiliaires E4 à E6 sont possibles, en fonction des applications envisagées (et des déplacements devant être commandés).

Ainsi, dans une première réalisation représentée sur la figure 7, le système de génération de déplacement comprend les deux étages de commande auxiliaires E4 et E5 qui sont représentés en trait fin sur cette figure 7.

L'étage de commande auxiliaire E4 peut comporter un élément de déplacement 23 pour générer le déplacement Yi. Dans un mode de réalisation particulier, l'élément de déplacement 23 est pourvu d'un rail de guidage 25 portant un chariot mobile 26, et de moyens de commande de déplacement (non représentés) du chariot mobile 26 sur le rail de guidage 25, tels qu'un moteur électrique par exemple, qui sont commandables, de façon usuelle, par un opérateur ou par un système de commande automatique. Le chariot mobile 26 est donc monté mobile sur le rail de guidage 25 et il porte l'étage de commande auxiliaire E5.

L'étage de commande auxiliaire E5 peut comporter un élément de déplacement 24 pour générer le déplacement Xi. Dans un mode de réalisation particulier, l'élément de déplacement 24 est également pourvu d'un rail de guidage 27 portant également un chariot mobile 28, et de moyens de commande déplacement (non représentés) du chariot mobile 28 sur le rail de guidage 27, tels qu'un moteur électrique par exemple, qui sont commandables, de façon usuelle, par un opérateur ou par un système de commande automatique. Le chariot mobile 28 est donc monté mobile sur le rail de guidage 27 et il porte le module de commande M2.

Le système de génération de déplacement selon cette première réalisation est donc en mesure de générer des déplacements Xi, Yi, Zi, θX et θY.

En outre, dans une seconde réalisation préférée, représentée sur la figure 8, le système de génération de déplacement comprend, associés au module de commande M2, simultanément les trois étages de commande auxiliaires E4, E5 et E6 qui sont représentés en trait fin sur cette figure 8. Les étages de commande auxiliaire E4 et E5 sont similaires à ceux de la figure 7.

Quant à l'étage de commande auxiliaire E6, il peut comporter un élément de mise en rotation 29, par exemple un moteur, pour générer le déplacement θZ, c'est-à-dire pour générer une rotation autour de l'axe Z. Dans l'exemple représenté sur la figure 8, l'élément de mise en rotation 29 (qui est commandable de façon usuelle par un opérateur ou par un système de commande automatique), est monté sur la plaque supérieure 14 du module de commande M2.

Le système de génération de déplacement selon cette seconde réalisation est donc en mesure de générer les déplacements Xi, Yi, Zi, θX, θY et θZ (c'est-à-dire des déplacements selon les six degrés de liberté).

## Revendications

1. Système de génération de déplacement d'une plaque de support, la plaque de support (2) étant, dans une position dite neutre, sensiblement parallèle à un plan XY défini par une direction dite X et une direction dite Y, ledit système (1) étant configuré pour pouvoir déplacer ladite plaque de support (2) selon au moins certains des six degrés de liberté, lesdits six degrés de liberté correspondant, respectivement, à une translation dite Xi le long de la direction X et une rotation dite θX autour de cette direction X, à une translation dite Yi le long de la direction Y et une rotation dite θY autour de cette direction Y, à une translation dite Zi le long d'une direction dite Z et une rotation dite θZ autour de cette direction Z, la direction Z étant orthogonale auxdites directions X et Y, ledit système comprenant au moins deux étages de commande (E1, E2) superposés selon la direction Z et solidarisés l'un à l'autre, au moins l'un desdits étages de commande (E1, E2) comprenant un module de commande (M1, M2),
**caractérisé en ce que** ledit au moins un module de commande (M1, M2) comprend uniquement des unités de déplacement (U1, U2) configurées pour générer chacune un déplacement en translation de la plaque de support (2) dans le plan XY, et ceci respectivement selon des directions différentes, et **en ce que** ledit au moins un module de commande dit premier module de commande (M1) comprend :
- une première plaque inférieure (5) et une première plaque supérieure (6) ;
- au moins deux unités de déplacement (U1), les unités de déplacement (U1) étant fixées sur une face supérieure (5A) de la première plaque inférieure (5) ; et
- des rails de guidage (7) rectilignes, chacun desdits rails de guidage (7) étant monté sur l'une desdites unités de déplacement (U1) auquel il est associé, chacun desdits rails de guidage (7) étant agencé orthogonalement à la direction de déplacement de l'unité de déplacement (U1) associée et étant configuré de manière à se déplacer sous l'action de l'unité de déplacement (U1) associée, chacun desdits rails de guidage (7) portant un chariot mobile (8) qui est configuré pour être librement mobile orthogonalement à la direction de déplacement de l'unité de déplacement (U1) associée, chacun desdits chariots mobiles (8) étant lié à une face inférieure (6A) de la première plaque supérieure (6).

2. Système selon la revendication 1,
**caractérisé en ce que** les unités de déplacement (U1, U2) sont agencées dans le plan XY et positionnées de manière à présenter des directions de translation différentes qui forment, respectivement, un angle de 120° entre elles.

3. Système selon l'une des revendications 1 et 2,
**caractérisé en ce que** le premier module de commande (M1) est configuré pour générer des déplacements Xi et Yi, et il comprend deux unités de déplacement et un rail de guidage auxiliaire rectiligne, le rail de guidage auxiliaire étant agencé selon une direction différente des directions de déplacement des deux unités de déplacement et portant un chariot mobile configuré pour être librement mobile, le chariot mobile étant fixé à la face inférieure de la première plaque supérieure.

4. Système selon l'une des revendications 1 et 2,
**caractérisé en ce que** le premier module de commande (M1) est configuré pour générer des déplacements Yi et θZ, et il comprend deux unités de déplacement et un rail de guidage auxiliaire rectiligne, le rail de guidage auxiliaire étant agencé selon une direction différente des directions de déplacement des deux unités de déplacement et portant un chariot mobile configuré pour être librement mobile, chacun desdits trois chariots mobiles étant pourvu d'un système de rotation configuré pour être librement rotatif dans le plan XY, les trois systèmes de rotation étant liés, chacun, à la face inférieure de la première plaque supérieure.

5. Système selon la revendication 4,
**caractérisé en ce qu'**il comporte un étage de commande auxiliaire (E3) configuré pour générer un déplacement Xi dudit premier module de commande (M1).

6. Système selon l'une des revendications 1 et 2,
**caractérisé en ce que** le premier module de commande (M1) est configuré pour générer des déplacements Xi, Yi et θZ, et il comprend :
- trois unités de déplacement (U1) ; et
- trois rails de guidage (7) rectilignes, chacun desdits rails de guidage (7) étant monté sur l'une desdites unités de déplacement (U1) auquel il est associé, chacun desdits rails de guidage (7) étant agencé orthogonalement à la direction de déplacement de l'unité de déplacement (U1) associée et étant configuré de manière à se déplacer sous l'action de l'unité de déplacement (U1) associée, chacun desdits rails de guidage (7) portant un chariot mobile (8) qui est configuré pour être librement mobile orthogonalement à la direction de déplacement de l'unité de déplacement (U1) associée, chacun desdits chariots mobiles (8) étant pourvu d'un système de rotation (9) configuré pour être librement rotatif dans le plan XY, les trois systèmes de rotation (9) étant liés, chacun, à la face inférieure (6A) de la première plaque supérieure (6).

7. Système selon l'une quelconque des revendications précédentes, **caractérisé en ce qu'**un second module de commande (M2) est configuré pour générer des déplacements θX, θY et Zi, et il comprend :
- une seconde plaque inférieure (13) et une seconde plaque supérieure (14) ;
- trois unités de déplacement (U2) configurées pour générer un déplacement en translation, les unités de déplacement (U2) étant fixées sur une face supérieure (13A) de la seconde plaque inférieure (13) ; et
- trois rails de guidage (15) rectilignes, chacun desdits rails de guidage (15) étant monté, de façon inclinée par rapport au plan XY, sur l'une desdites unités de déplacement (U2) auquel il est associé, chacun desdits rails de guidage (15) étant agencé longitudinalement à la direction de déplacement de l'unité de déplacement (U2) associée et étant configuré de manière à se déplacer sous l'action de l'unité de déplacement (U2) associée, chacun desdits rails de guidage (15) portant un chariot mobile (16) qui est configuré pour être librement mobile, chacun desdits chariots mobiles (16) étant pourvu d'une rotule (19) configurée pour être librement rotative, les trois rotules (19) étant articulées, chacune, à la face inférieure (14A) de la première plaque supérieure (14).

8. Système selon la revendication 7,
**caractérisé en ce qu'**il comporte, de plus, au moins l'un des trois étages de commande auxiliaires suivants :
- un étage de commande auxiliaire (E5) configuré pour générer un déplacement Xi ;
- un étage de commande auxiliaire (E4) configuré pour générer un déplacement Yi ; et
- un étage de commande auxiliaire (E6) configuré pour générer un déplacement θZ.

9. Système selon les revendications 6 et 7,
**caractérisé en ce qu'**il comprend uniquement deux étages de commande (E1, E2), dont un premier (E1), dit inférieur, comprend ledit premier module de commande (M1) configuré pour générer des déplacements Xi, Yi et θZ, et dont un second, dit supérieur, comprend ledit second module de commande (M2) configuré pour générer des déplacements θX, θY et Zi.

## Patentansprüche

1. System zur Erzeugung der Bewegung einer Trägerplatte, wobei die Trägerplatte (2) in einer sogenannten neutralen Position im Wesentlichen parallel zu einer XY-Ebene ist, die durch eine Richtung, genannt X, und eine Richtung, genannt Y, definiert ist, wobei das System (1) konfiguriert ist, um die Trägerplatte (2) in mindestens einigen der sechs Freiheitsgrade bewegen zu können, wobei die sechs Freiheitsgrade jeweils einer Translation, genannt Xi, entlang der Richtung X, und einer Rotation, genannt θX, um diese Richtung X, einer Translation, genannt Yi, entlang der Richtung Y, und einer Rotation, genannt θY, um diese Richtung Y, einer Translation, genannt Zi, entlang einer Z genannten Richtung, und einer Rotation, genannt θZ, um diese Richtung Z entsprechen, wobei die Richtung Z orthogonal zu den Richtungen X und Y ist, wobei das System mindestens zwei Steuerstufen (E1, E2) umfasst, die in der Z-Richtung überlagert und miteinander fest verbunden sind, wobei mindestens eine der Steuerstufen (E1, E2) ein Steuermodul (M1, M2) umfasst,
**dadurch gekennzeichnet, dass** das mindestens eine Steuermodul (M1, M2) nur Bewegungseinheiten (U1, U2) umfasst, die konfiguriert sind, um jeweils eine Translationsbewegung der Trägerplatte (2) in der XY-Ebene und dies jeweils in verschiedene Richtungen zu erzeugen, und dass das mindestens eine Steuermodul, genannt erstes Steuermodul (M1), Folgendes umfasst:
- eine erste untere Platte (5) und eine erste obere Platte (6);
- mindestens zwei Bewegungseinheiten (U1), wobei die Bewegungseinheiten (U1) auf einer Oberseite (5A) der ersten unteren Platte (5) angebracht sind; und
- geradlinige Führungsschienen (7), wobei jede der Führungsschienen (7) auf einer der Bewegungseinheiten (U1) montiert ist, der sie zugeordnet ist, wobei jede der Führungsschienen (7) orthogonal zur Bewegungsrichtung der zugeordneten Bewegungseinheit (U1) angeordnet und so konfiguriert ist, dass sie sich unter der Wirkung der zugeordneten Bewegungseinheit (U1) bewegt, wobei jede der Führungsschienen (7) einen beweglichen Schlitten (8) trägt, der so konfiguriert ist, dass er orthogonal zur Bewegungsrichtung der zugeordneten Bewegungseinheit (U1) frei beweglich ist, wobei jeder der beweglichen Schlitten (8) mit einer Unterseite (6A) der ersten oberen Platte (6) verbunden ist.

2. System nach Anspruch 1,
**dadurch gekennzeichnet, dass** die Bewegungseinheiten (U1, U2) in der XY-Ebene angeordnet und so positioniert sind, dass sie unterschiedliche Translationsrichtungen aufweisen, die jeweils einen Winkel von 120° zwischen ihnen bilden.

3. System nach einem der Ansprüche 1 und 2,
**dadurch gekennzeichnet, dass** das erste Steuermodul (M1) konfiguriert ist, um Bewegungen Xi und Yi zu erzeugen, und es zwei Bewegungseinheiten und eine geradlinige Hilfsführungsschiene umfasst, wobei die Hilfsführungsschiene in einer Richtung angeordnet ist, die sich von den Bewegungsrichtungen der beiden Bewegungseinheiten unterscheidet und einen beweglichen Schlitten trägt, der so konfiguriert ist, dass er frei beweglich ist, wobei der bewegliche Schlitten an der Unterseite der ersten oberen Platte angebracht ist.

4. System nach einem der Ansprüche 1 und 2,
**dadurch gekennzeichnet, dass** das erste Steuermodul (M1) konfiguriert ist, um Bewegungen Yi und θZ zu erzeugen, und es zwei Bewegungseinheiten und eine geradlinige Hilfsführungsschiene umfasst, wobei die Hilfsführungsschiene in einer Richtung angeordnet ist, die sich von den Bewegungsrichtungen der beiden Bewegungseinheiten unterscheidet, und einen beweglichen Schlitten trägt, der so konfiguriert ist, dass er frei beweglich ist, wobei jeder der drei beweglichen Schlitten mit einem Rotationssystem ausgestattet ist, das konfiguriert ist, um in der XY-Ebene frei drehbar zu sein, wobei die drei Rotationssysteme jeweils mit der Unterseite der ersten oberen Platte verbunden sind.

5. System nach Anspruch 4,
**dadurch gekennzeichnet, dass** es eine Hilfssteuerstufe (E3) einschließt, die konfiguriert ist, um eine Bewegung Xi des ersten Steuermoduls (M1) zu erzeugen.

6. System nach einem der Ansprüche 1 und 2,
**dadurch gekennzeichnet, dass** das erste Steuermodul (M1) konfiguriert ist, um Bewegungen Xi, Yi und θZ zu erzeugen, und es umfasst:
- drei Bewegungseinheiten (U1); und
- drei geradlinige Führungsschienen (7), wobei jede der Führungsschienen (7) auf einer der Bewegungseinheiten (U1) montiert ist, der sie zugeordnet ist, wobei jede der Führungsschienen (7) orthogonal zur Bewegungsrichtung der zugeordneten Bewegungseinheit (U1) angeordnet und so konfiguriert ist, dass sie sich unter der Wirkung der zugeordneten Bewegungseinheit (U1) bewegt, wobei jede der Führungsschienen (7) einen beweglichen Schlitten (8) trägt, der so konfiguriert ist, dass er orthogonal zur Bewegungsrichtung der zugeordneten Bewegungseinheit (U1) frei beweglich ist, wobei jeder der beweglichen Schlitten (8) mit einem Rotationssystem (9) ausgestattet ist, das konfiguriert ist, um in der XY-Ebene frei drehbar zu sein, wobei die drei Rotationssysteme (9) jeweils mit der Unterseite (6A) der ersten oberen Platte (6) verbunden sind.

7. System nach einem der vorstehenden Ansprüche,
**dadurch gekennzeichnet, dass** ein zweites Steuermodul (M2) konfiguriert ist, um Bewegungen θX, θY und Zi zu erzeugen, und es umfasst:
- eine zweite untere Platte (13) und eine zweite obere Platte (14);
- drei Bewegungseinheiten (U2), die konfiguriert sind, um eine Translationsbewegung zu erzeugen, wobei die Bewegungseinheiten (U2) auf einer Oberseite (13A) der zweiten unteren Platte (13) angebracht sind; und
- drei geradlinige Führungsschienen (15), wobei jede der Führungsschienen (15) auf geneigte Weise zur XY-Ebene auf einer der Bewegungseinheiten (U2), der sie zugeordnet ist, montiert ist, wobei jede der Führungsschienen (15) in Längsrichtung zur Bewegungsrichtung der zugeordneten Bewegungseinheit (U2) angeordnet und so konfiguriert ist, dass sie sich unter der Wirkung der zugeordneten Bewegungseinheit (U2) bewegt, wobei jede der Führungsschienen (15) einen beweglichen Schlitten (16) trägt, der so konfiguriert ist, dass er frei beweglich ist, wobei jeder der beweglichen Schlitten (16) mit einem Kugelgelenk (19) ausgestattet ist, das so konfiguriert ist, dass es frei drehbar ist, wobei die drei Kugelgelenke (19) jeweils an der Unterseite (14A) der ersten oberen Platte (14) angelenkt sind.

8. System nach Anspruch 7,
**dadurch gekennzeichnet, dass** es ferner mindestens eine der folgenden drei Hilfssteuerstufen einschließt:
- eine Hilfssteuerstufe (E5), die konfiguriert ist, um eine Bewegung Xi zu erzeugen;
- eine Hilfssteuerstufe (E4), die konfiguriert ist, um eine Bewegung Yi zu erzeugen; und
- eine Hilfssteuerstufe (E6), die konfiguriert ist, um eine Bewegung θZ zu erzeugen.

9. System nach einem der Ansprüche 6 und 7,
**dadurch gekennzeichnet, dass** es nur zwei Steuerstufen (E1, E2) umfasst, von denen eine erste (E1), genannt untere, das erste Steuermodul (M1) umfasst, das konfiguriert ist, um Bewegungen Xi, Yi und θZ zu erzeugen, und von denen eine zweite, genannt obere, das zweite Steuermodul (M2) umfasst, das konfiguriert ist, um Bewegungen θX, θY und Zi zu erzeugen.

## Claims

1. System for generating the movement of a support plate, the support plate (2) being, in a so-called neutral position, substantially parallel to an XY plane defined by a so-called X direction and a so-called Y direction, said system (1) being configured to be able to move said support plate (2) in at least some of the six degrees of freedom, said six degrees of freedom corresponding, respectively, to a so-called Xi translation along the X direction and a so-called θX rotation around this X direction, to a so-called Yi translation along the Y direction and a so-called θY rotation around this Y direction, to a so-called Zi translation along a so-called Z direction and a so-called θZ rotation around this Z direction, with the Z direction being orthogonal to said X and Y directions, said system comprising at least two control stages (E1, E2) superimposed in a direction Z and being secured to each other, at least one of said control stages (E1, E2) comprising a control module (M1, M2),
**characterised in that** said at least one control module (M1, M2) comprises only movement units (U1, U2) designed so as to each generate a translational movement of the support plate (2) in the XY plane, and this respectively in different directions, and **in that** said at least one control module, called first control module (M1), comprises:
- a first lower plate (5) and a first upper plate (6);
- at least two movement units (U1), the movement units (U1) being fixed on an upper face (5A) of the first lower plate (5); and
- straight guide rails (7), each one of said guide rails (7) being mounted on one of said movement units (U1) to which it is associated, each one of said guide rails (7) being arranged orthogonally to the direction of movement of the associated movement unit (U1) and being designed in such a way as to move under the action of the associated movement unit (U1), each one of said guide rails (7) carrying a mobile carriage (8) which is designed to be freely mobile orthogonally to the direction of movement of the associated movement unit (U1), each one of said mobile carriages (8) being connected to a lower face (6A) of the first upper plate (6).

2. System according to claim 1, **characterised in that** the movement units (U1, U2) are arranged in the XY plane and positioned in such a way as to have different directions of translation that form, respectively, an angle of 120° between them.

3. System according to one of claims 1 and 2, **characterised in that** the first control module (M1) is designed to generate Xi and Yi movements, and **in that** it comprises two movement units and a straight auxiliary guide rail, the auxiliary guide rail being arranged in a direction different from the directions of movement of the two movement units and carrying a mobile carriage designed to be freely mobile, the mobile carriage being fixed to the lower face of the first upper plate.

4. System according to one of claims 1 and 2, **characterised in that** the first control module (M1) is designed to generate Yi and θZ movements, and **in that** it comprises two movement units and a straight auxiliary guide rail, the auxiliary guide rail being arranged in a direction different from the directions of movement of the two movement units and carrying a mobile carriage designed to be freely mobile, each one of said mobile carriages being provided with a rotation system designed to rotate freely in the XY plane, the three rotation systems being connected, each one, to the lower face of the first upper plate.

5. System according to claim 4, **characterised in that** it comprises an auxiliary control stage (E3) designed to generate an Xi movement of the so-called first control module (M1).

6. System according to one of claims 1 and 2, **characterised in that** the first control module (M1) is designed to generate Xi, Yi and θZ movements, and **in that** it comprises:
- three movement units (U1); and
- three straight guide rails (7), each one of said guide rails (7) being mounted on one of said movement units (U1) to which it is associated, each one of said guide rails (7) being arranged orthogonally to the direction of movement of the associated movement unit (U1) and being designed in such a way as to move under the action of the associated movement unit (U1), each one of said guide rails (7) carrying a mobile carriage (8), which is designed to be freely mobile orthogonally to the direction of movement of the associated movement unit (U1), each one of said mobile carriages (8) being provided with a rotation system (9) designed to rotate freely in the XY plane, the three rotation systems (9) being connected, each one, to the lower face (6A) of the first upper plate (6).

7. System as claimed in any preceding claim, **characterised in that** a second control module (M2) is designed to generate θX, θY and Zi movements, and **in that** it comprises:
- a second lower plate (13) and a second upper plate (14);
- three movement units (U2) designed so as to generate a translational movement, the movement units (U2) being fixed on an upper face (13A) of the second lower plate (13); and
- three straight guide rails (15), each one of said guide rails (15) being mounted, in an inclined manner with respect to the XY plane, on one of said movement units (U2) to which it is associated, each one of said guide rails (15) being arranged longitudinally to the direction of movement of the associated movement unit (U2) and being designed in such a way as to move under the action of the associated movement unit (U2), each one of said guide rails (15) carrying a mobile carriage (16) which is designed to be freely mobile, each one of said mobile carriages (16) being provided with a ball (19) designed to be freely rotating, the three balls (19) being articulated, each one, to the lower face (14A) of the first upper plate (14).

8. System according to claim 7, **characterised in that** it comprises, in addition, at least one of the following three auxiliary control stages:
- an auxiliary control stage (E5) designed to generate an Xi movement;
- an auxiliary control stage (E4) designed to generate a Yi movement; and
- an auxiliary control stage (E6) designed to generate a θZ movement.

9. System according to claims 6 and 7, **characterised in that** it comprises only two control stages (E1, E2), of which one so-called lower control stage (E1) comprises the so-called first control module (M1) designed to generate Xi, Yi and θZ movements, and of which a so-called second control stage comprises said second control module (M2) designed to generate θX, θY and Zi movements.
